# EUROPÄISCHE PATENTSCHRIFT

(11) **EP 1 185 794 B1**
(45) Veröffentlichungstag und Bekanntmachung des Hinweises auf die Patenterteilung: **03.12.2003**
(21) Anmeldenummer: 01927608.8
(22) Anmeldetag: 24.03.2001
(51) Int. Cl.: F04B 53/20, F04B 1/04, F04B 53/16

(54) **KOLBENPUMPE**
PISTON PUMP
POMPE A PISTON

(30) Priorität: 28.03.2000 DE 10015295
(43) Veröffentlichungstag der Anmeldung: 13.03.2002
(73) Patentinhaber: ROBERT BOSCH GMBH, 70442 Stuttgart (DE)
(72) Erfinder: HAUSER, Manfred, 71701 Schwieberdingen (DE); ALAZE, Norbert, 71706 Markgroeningen (DE); DUERMEIER, Thorsten, 71665 Vaihingen/Enz (DE); ECKSTEIN, Ursula, 71701 Schwieberdingen (DE); MANK, Erika, 71634 Ludwigsburg (DE)
(86) Internationale Anmeldenummer: DE0101156
(87) Internationale Veröffentlichungsnummer: WO01073294

(56) Entgegenhaltungen:
- DE-A- 19 732 792
- DE-A- 19 732 817
- DE-A- 19 742 611

## Beschreibung

### Stand der Technik

Die Erfindung betrifft eine Kolbenpumpe nach der Gattung des Hauptanspruchs, die insbesondere für eine hydraulische, eine Schlupfregeleinrichtung aufweisende Fahrzeugbremsanlage vorgesehen ist.

Eine derartige Kolbenpumpe ist bekannt aus der DE 197 32 817 A1. Die bekannte Kolbenpumpe weist einen Kolben auf, der auf einem Teil seiner Länge axial verschieblich in einer Laufbuchse aufgenommen ist. Zusammen mit der Laufbuchse ist der Kolben in eine Pumpenbohrung eines Pumpengehäuses einsetzbar, wobei der Kolben auf einem aus der Laufbuchse vorstehenden Abschnitt axial verschieblich in der Pumpenbohrung im Pumpengehäuse geführt ist. Auf die Laufbuchse ist die Laufbuchse verlängernd ein rohrförmiges Filter aufgesetzt, das den Kolben auf seinem aus der Laufbuchse vorstehenden Abschnitt umschließt. Das Filter bildet eine Verliersicherung, das eine Hinterschneidung, beispielsweise eine Ringstufe des Kolbens hintergreift und den Kolben dadurch in der Laufbuchse hält. Die Laufbuchse, der Kolben und das den Kolben in der Laufbuchse haltende Filter bilden eine Vormontagebaugruppe, die außerhalb des Pumpengehäuses zusammengesetzt und anschließend in die Pumpenbohrung im Pumpengehäuse eingesetzt wird. Das die Verliersicherung bildende Filter hat den Zweck, den Kolben in der Laufbuchse zu halten, bis die Vormontagebaugruppe in die Pumpenbohrung im Pumpengehäuse eingesetzt wird. Ist die Vormontagebaugruppe in das Pumpengehäuse eingesetzt, wird der Kolben von einem ihn antreibenden Exzenter in der Laufbuchse gehalten, so dass die Verliersicherung des Kolbens durch das Filter nicht mehr notwendig ist.

Zur Abdichtung des Kolbens im Pumpengehäuse ist ein Dichtring und zur axialen Führung des Kolbens im Pumpengehäuse ist ein Führungsring in Verlängerung des Filters in die Pumpenbohrung eingelegt. Zum Ausgleich von Längentoleranzen muss bei der bekannten Kolbenpumpe ein vergleichsweise großes Spiel in axialer Richtung zwischen dem Filter und dem Dichtring vorgesehen werden, der Dichtring hat ein großes Axialspiel. Dies hat den Nachteil, dass sich der Dichtring während eines Saughubs der Kolbenpumpe in Richtung des Filters bewegen kann, wodurch sich ein Ansaugvolumen und damit ein Wirkungsgrad der Kolbenpumpe verringern. Des weiteren kann der Dichtring durch eine Axialbewegung bei der Hubbewegung des Kolbens einen Leckagestrom aus der Kolbenpumpe heraus in einen Exzenterraum fördern und in umgekehrter Richtung Luft in die Kolbenpumpe hinein ansaugen, was die Pumpleistung ebenfalls beeinträchtigt.

### Vorteile der Erfindung

Bei der erfindungsgemäßen Kolbenpumpe mit den Merkmalen des Anspruchs 1 ist das Filter axial verschiebbar an der Laufbuchse angebracht. Dadurch wird erreicht, dass das Filter seine endgültige Axialposition in Bezug auf die Laufbuchse erst beim Einsetzen der Laufbuchse zusammen mit dem Kolben und dem Filter in die Pumpenbohrung im Pumpengehäuse einnimmt. Die Erfindung erzielt einen Toleranzausgleich in axialer Richtung zwischen der Laufbuchse und dem daran angebrachten Filter, wodurch sich ein Axialspiel für einen den Kolben im Pumpengehäuse abdichtenden Dichtring mit enger Toleranz ausführen lässt. Dies hat den Vorteil, dass sich eine unerwünschte axiale Beweglichkeit des Dichtrings verringern und, sofern es der Dichtring zulässt, zu null machen lässt. Eine Förderung von Leckagefluid durch Axialbewegung des Dichtrings infolge einer Hubbewegung des Kolbens der Kolbenpumpe wird vermieden. Des weiteren wird ein Verschleiß des Dichtrings verringert und es wird vermieden, dass der Dichtring durch Axialbewegung während eines Saughubs des Kolbens der erfindungsgemäßen Kolbenpumpe deren Ansaugvolumen verringert.

Die Unteransprüche haben vorteilhafte Ausgestaltungen und Weiterbildungen der im Hauptanspruch angegebenen Erfindung zum Gegenstand.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfasst oder bei der die Pumpe zum Füllen eines Speichers der Bremsanlage dient.

### Zeichnung

Die Erfindung wird nachfolgend anhand eines in der Zeichnung dargestellten, bevorzugt ausgewählten Ausführungsbeispiels der Erfindung näher erläutert. Es zeigen:
- Figur 1: einen Achsschnitt einer erfindungsgemäßen Kolbenpumpe, und
- Figur 2: eine vergrößerte Darstellung einer Einzelheit gemäß Pfeil II in Figur 1.

### Beschreibung des Ausführungsbeispiels

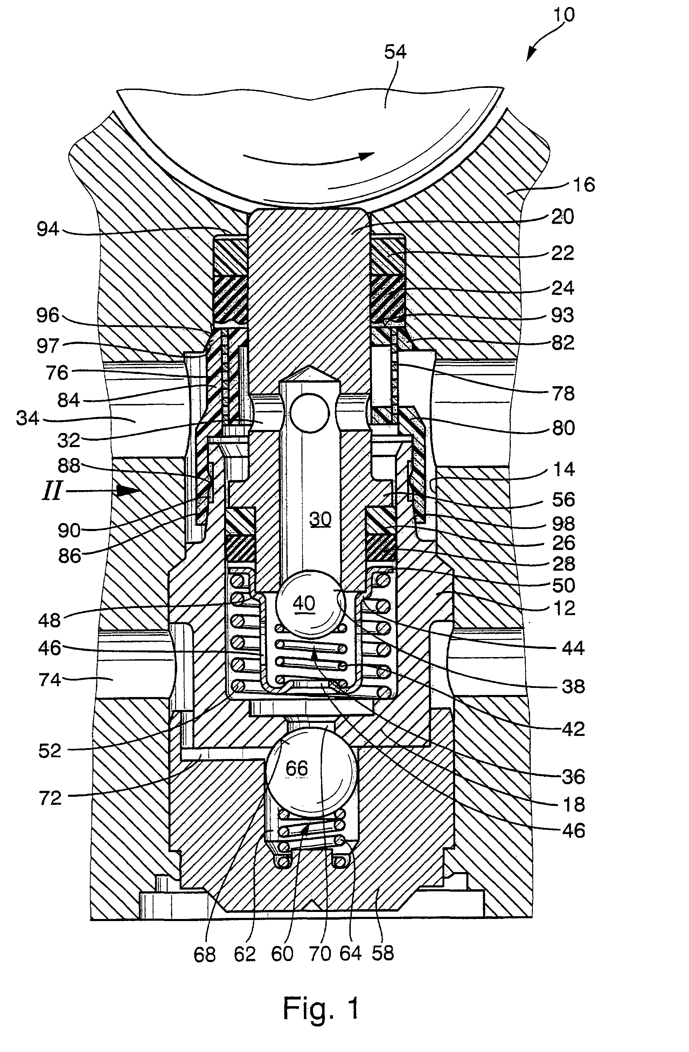

Die in Figur 1 dargestellte insgesamt mit 10 bezeichnete erfindungsgemäße Kolbenpumpe weist eine Laufbuchse 12 auf, die in eine gestufte Pumpenbohrung 14 eines Hydraulikblocks eingesetzt ist, der ein Pumpengehäuse 16 bildet. Der Hydraulikblock, von dem in der Zeichnung lediglich ein die Kolbenpumpe 10 umgebendes Bruchstück dargestellt ist, ist Teil einer schlupfgeregelten, im übrigen nicht dargestellten, hydraulischen Fahrzeugbremsanlage. In ihn sind außer der Kolbenpumpe 10 weitere hydraulische Bauelemente wie Magnetventile und Hydrospeicher eingesetzt und ein Hauptbremszylinder sowie Radbremszylinder angeschlossen. Mittels des Hydraulikblocks sind die hydraulischen Bauelemente hydraulisch miteinander verschaltet.

Die Laufbuchse 12 hat die Form eines Hohlzylinders mit einem mit ihr einstückigen Laufbuchsenboden 18. In der Laufbuchse 12 ist ein zylindrischer Kolben 20 über etwa die Hälfte seiner Länge aufgenommen. Ein in der Laufbuchse 12 befindliches Ende des Kolbens 20 ist mit einem Führungsring 26 an einer Innenoberfläche der Laufbuchse 12 axial verschieblich geführt und mit einem Dichtring 28 abgedichtet. Das andere, aus der Laufbuchse 12 vorstehende Ende des Kolbens 20 ist mittels eines Führungsrings 22 axial verschieblich unmittelbar in der Pumpenbohrung 14 des Pumpengehäuses 16 geführt und mit einem Dichtring 24 am Pumpengehäuse 16 abgedichtet.

Zum Fluideinlass ist der Kolben 20 mit einer axialen Sackbohrung 30 von seinem in der Laufbuchse 12 befindlichen Ende her versehen, die nahe ihres Grundes von Querbohrungen 32 gekreuzt wird. Durch die Querbohrungen 32 kommuniziert die Sackbohrung 30 mit einer Einlassbohrung 34, die radial zur Kolbenpumpe 12 in Höhe eines offenen, dem Laufbuchsenboden 18 gegenüberliegenden Endes der Laufbuchse 12 in die Pumpenbohrung 14 mündet.

Als Einlassventil 36 weist die erfindungsgemäße Kolbepumpe 10 ein federbelastetes Rückschlagventil auf, welches an dem in der Laufbuchse 12 befindlichen Ende des Kolbens 20 angebracht ist: Eine Mündung der Sackbohrung 30 ist als konischer Ventilsitz 38 ausgebildet, gegen den eine Ventilkugel 40 als Ventilschließkörper von einer Schraubendruckfeder als Ventilschließfeder 42 gedrückt wird. Die Ventilschließfeder 42 stützt sich gegen einen Boden eines topfförmigen Ventilkäfigs 44 ab, der als Tiefziehteil aus Blech hergestellt ist und axiale und/oder radiale Durchlässe 46 aufweist. An seiner offenen Seite weist der Ventilkäfig 44 eine umlaufende Ringstufe 48, mit der er an dem in der Laufbuchse 12 befindlichen Ende des Kolbens 20 anliegt, und einen Radialflansch 50, an dem er von einer Kolbenrückstellfeder 52 gegen das Ende des Kolbens 20 gedrückt wird, auf. Die Ventilkugel 40 und die Ventilschließfeder 42 sind im Ventilkäfig 44 aufgenommen. Die Kolbenrückstellfeder 52 ist stärker ausgebildet als die Ventilschließfeder 42. Die Kolbenrückstellfeder 52 stützt sich gegen den Laufbuchsenboden 18 ab.

Zum Antrieb des Kolbens 20 zu einer in axialer Richtung hin- und hergehenden Hubbewegung weist die erfindungsgemäße Kolbenpumpe 10 einen elektromotorisch rotierend antreibbaren Exzenter 54 auf, gegen dessen Umfang der Kolben 20 von der Kolbenrückstellfeder 54 gedrückt wird.

Der in der Laufbuchse 12 befindliche Führungsring 26 und Dichtring 28 sind in axialer Richtung zwischen dem Radialflansch 50 des Ventilkäfigs 44 und einem Kolbenbund 56 auf dem Kolben 20 fixiert.

Im Bereich des Laufbuchsenbodens 18 ist auf die Laufbuchse 12 ein zylindrisches Verschlusselement 58 aufgepresst, das zum druckdichten Verschließen der Pumpenbohrung 14 und zum Fixieren der Laufbuchse 12 im Pumpengehäuse 16 dient. Das Verschlusselement 58 kann auch über eine Bördelverbindung mit der Laufbuchse 12 verbunden sein, wobei zwischen der Laufbuchse 12 und dem Verschlusselement 58 ein Radialspiel vorgesehen sein kann. Im Verschlusselement 58 ist ein Auslassventil 60 in Form eines federbelasteten Rückschlagventils untergebracht: Das Verschlusselement 58 weist eine koaxiale Sackbohrung 62 auf, in die eine Schraubendruckfeder als Ventilschließfeder 64 und eine Ventilkugel 66 als Ventilschließkörper eingesetzt sind. Die Ventilkugel 66 wirkt zusammen mit einem konischen Ventilsitz 68, welcher an einer Mündung einer Mittelbohrung 70 angebracht ist, die den Laufbuchsenboden 18 axial durchsetzt. Ein Auslaß des Fluids erfolgt durch Radialkanäle 72 zwischen dem Laufbuchsenboden 18 und dem Verschlusselement 58 in eine radiale Auslassbohrung 74 im Pumpengehäuse 16.

In Verlängerung der Laufbuchse 12 ist an deren offenem Ende ein hohlzylindrisches Filter 76 angebracht, das ungefähr den Durchmesser der Laufbuchse 12 hat. Das Filter 76 weist ein schlauchförmiges Filtergewebe 78 auf, das mit einem Filtergerüst 80, 82, 84 aus Kunststoff umspritzt ist. Das Filtergewebe 78 besteht aus Metall oder aus Kunststoff. An seinem der Laufbuchse 12 zugewandten stirnseitigen Ende hat das Filter 76 einen Ring 80, und an seinem dem Exzenter 54 zugewandten Ende hat das Filter 76 einen Ring 82. Die beiden Ringe 80, 82 sind durch Stege 84 einstückig miteinander verbunden. Die Stege 84 und die Ringe 80, 82 bilden das Filtergerüst 80, 82, 84. Eine Zuströmung zur Kolbenpumpe 10 erfolgt von der Einlassbohrung 34 zwischen den Ringen 80, 82 und Stegen 84 des Filtergerüsts 80, 82, 84 hindurch durch das Filtergewebe 78 in das offene Ende der Laufbuchse 12 hinein. Damit das Fluid aus der Einlassbohrung 34 durch das Filtergewebe 78 des Filters 76 in die Querbohrungen 32 im Kolben 20 strömen kann, besteht umfangsmäßig ein Spalt zwischen dem Ring 80 des Filters 76 und dem Kolben 20 oder aber der Ring 80 ist mit einigen axialen Durchbrüchen versehen.

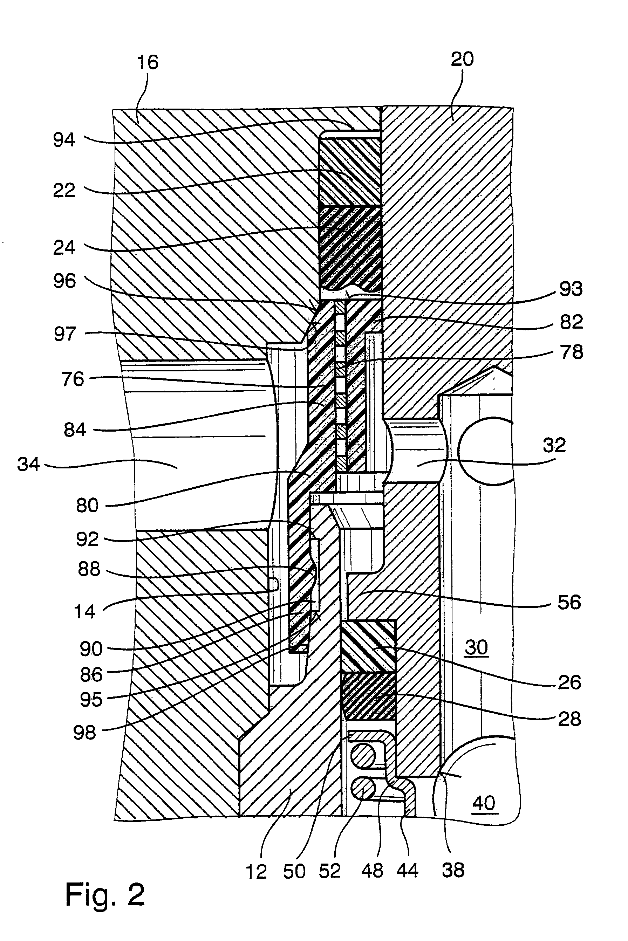

Zur Anbringung des Filters 76 an der Laufbuchse 12 weist das Filter 76 einen rohrförmigen Kragen 86 auf, der einstückig von dem der Laufbuchse 12 zugewandten Ring 80 des Filters 76 in axialer Richtung absteht und der ein dem Filter 76 zugewandtes Ende der Laufbuchse 12 umschließt. Der Kragen 86 des Filters 76 weist einen radial nach innen abstehenden, umlaufenden Wulst 88 auf, der in eine in axialer Richtung betrachtet breiten Nut 90 im Außenumfang der Laufbuchse 12 eingreift. Der im wesentlichen umlaufende Wulst 88 kann auch über den Umfang an einer Stelle oder mehrfach unterbrochen sein. Dabei bildet eine Nutwange 92 (Figur 2) der Nut 90 eine Hinterschneidung der Laufbuchse 12, die vom Wulst 88 im Kragen 86 des Filters 76 nach Art einer Schnapp- oder Rastverbindung hintergriffen wird. Die Nut 90 der Laufbuchse 12 ist in axialer Richtung betrachtet breiter als der Wulst 88 des Filters 76, so dass das Filter 76 in axialer Richtung um einen durch die Breite der Nut 90 begrenzten Weg verschieblich mit der Laufbuchse 12 verbunden ist. Gegenüberliegend zur Nutwange 92 endet die Nut 90 mit einer weiteren Nutwange 95. Das Filter 76 ist relativ zur Laufbuchse 12 axial verschiebbar, bis der Wulst 88 des Filters 76 entweder an der Nutwange 92 oder an der gegenüberliegenden Nutwange 95 der Nut 90 der Laufbuchse 12 anschlägt.

Das Filter 76 bildet eine Verliersicherung für den Kolben 20. Der der Laufbuchse 12 zugewandte Ring 80 des Filters 76 steht radial nach innen über den Innendurchmesser der Laufbuchse 12 vor. Der die Verliersicherung bildende Ring 80 hintergreift dadurch den Kolbenbund 56 des Kolbens 20. Der Ring 80 bildet einen Anschlag, der den Kolben 20 verliersicher in der Laufbuchse 12 hält.

Das die Verliersicherung für den Kolben 20 bildende Filter 76 hat die Aufgabe, den Kolben 20 gegen die Kraft der Kolbenrückstellfeder 52 verliersicher in der Laufbuchse 12 zu halten, bis die Laufbuchse 12 zusammen mit dem Kolben 20 in die Pumpenbohrung 14 des Pumpengehäuses 16 eingesetzt ist. Der Zusammenbau der erfindungsgemäßen Kolbenpumpe 10 geht folgendermaßen vonstatten: Es wird zunächst die Kolbenrückstellfeder 52 in die Laufbuchse 12 und anschließend der Kolben 20 mit dem aufgesetzten Einlassventil 36, dem Dichtring 28 und dem Führungsring 26 in die Laufbuchse 12 eingesetzt. Anschließend wird das Filter 76 über den Kolben 20 geschoben und mit dem Kragen 86 auf die Laufbuchse 12 aufgesetzt. Dabei schnappt der Wulst 88 des Kragens 86 in die Nut 90 der Laufbuchse 12 ein. Diese Schnappverbindung ist so kräftig ausgebildet, dass sie den Kolben 20 gegen die Kraft der Kolbenrückstellfeder 52 in der Laufbuchse 12 hält. Da bei Anlage des Kolbenbundes 56 an dem die Verliersicherung bildenden Ring 80 des Filters 76 die Kolbenrückstellfeder 52 weitgehend entspannt ist, reicht die Schnappverbindung 88, 90 zur Anbringung des Filters 76 an der Laufbuchse 12 aus.

Anschließend wird der Verschlusselement 58 mit dem Auslassventil 60 auf den Laufbuchsenboden 18 aufgesetzt. Die Laufbuchse 12 mit dem eingesetzten Kolben 20 und dem Einlassventil 36, dem angebrachten, die Verliersicherung für den Kolben 20 bildenden Filter 76 und das Verschlusselement 58 mit dem eingesetzten Auslassventil 60 bilden eine Vormontagebaugruppe, die komplett vormoniert in die Pumpenbohrung 14 des Pumpengehäuses 16 einsetzbar ist. Vor dem Einsetzen dieser Vormontagebaugruppe in die Pumpenbohrung 16 werden der Dichtring 24 und der Stützring 22 auf den aus der Laufbuchse 12 vorstehenden Abschnitt des Kolbens 20 aufgesetzt. Das Filter 76 hat eine dem Exzenter54 zugewandte, umlaufende Stirnseite 93. Beim Einsetzen der Vormontagebaugruppe in die Pumpenbohrung 14 werden der Stützring 22 und der Dichtring 24 von der Stirnseite 93 des Filters 76 bis zu einer Ringstufe 94 der Pumpenbohrung 14 geschoben. Um sicher zu stellen, dass der Führungsring 22 in die vorgesehene Position an der Ringschulter 94 geschoben wird, ist das Filter 76 mit seinem Kragen 86 klemmend auf die Laufbuchse 12 aufgesetzt und so weit von der Laufbuchse 12 zurückgezogen, dass der Wulst 88 des Kragens 86 an der die Hinterschneidung bildenden Nutwange 92 der Nut 90 der Laufbuchse 12 anliegt. Die Kolbenrückstellfeder 52 drückt über den Kolbenbund 56 auf das Filter 76. Bevor die Vormontagebaugruppe in die Pumpenbohrung 14 des Pumpengehäuses 16 eingebaut wird, sorgt die Kolbenrückstellfeder 52 dafür, dass der Wulst 88 des Filters 76 an der Nutwange 92 der Laufbuchse 12 anliegt. Die Kolbenrückstellfeder 52 sorgt also dafür, dass die Vormontagebaugruppe im gestreckten Zustand eingebaut wird. Erst während des Einbaus der Vormontagebaugrupp in das Pumpengehäuse 16 wird die Vormotagebauruppe dann gestaucht, wobei das Filter 76 relativ zur Laufbuchse 12 verschoben wird, wodurch Längentoleranzen bei den einzelnen Bauteilen sehr leicht ausgeglichen werden können.

Beim Einsetzen der Vormontagebaugruppe der Kolbenpumpe 10 in die Pumpenbohrung 14 stößt das Filter 76 mit einer konischen Anlagefläche 96 an eine Gegenfläche 97 der Pumpenbohrung 14, an der sich das Filter 76 axial abstützt. Die Anlagefläche 96 und die Gegenfläche 97 haben im dargestellten und beschriebenen Ausführungsbeispiel einen Konuswinkel von 60°. Die Konizität der Gegenfläche 97 der Pumpenbohrung 14 dient als Einführschräge für das Einbringen des auf den Kolben 20 aufgesetzten Führungsrings 22 und Dichtrings 24 in das dem Exzenter 54 zugewandte Ende der Pumpenbohrung14. Zudem zentriert die Gegenfläche 97 der Pumpenbohrung 14 aufgrund ihrer Konizität das Filter 76 in der Pumpenbohrung 14 und erleichtert das Einsetzen der Vormontagebaugruppe in die Pumpenbohrung 14. Die Anlagefläche 96 bestimmt die endgültige axiale Position des Filters 76 in der Pumpenbohrung 14, Sobald das Filter 76 mit seiner Anlagefläche 96 an der Gegenfläche 97 der Pumpenbohrung 14 anliegt, lässt sich nur noch die Laufbuchse 12 tiefer in die Pumpenbohrung 14 hineinverschieben, das Filter 76 bewegt sich nicht mehr weiter. Dabei hebt der Wulst 88 des Filters 76 in axialer Richtung von der Nutwange 92 der Laufbuchse 12 ab. Da die axiale Lage des Filters 76 durch seine Anlagefläche 96 in der Pumpenbohrung 14 exakt vorgegeben ist, lässt sich ein axialer Abstand zwischen der Stirnseite 93 des Filters 76 und der Ringschulter 94 der Pumpenbohrung 14 sehr genau einstellen. Dadurch ist es möglich, den Dichtring 24 mit geringem axialem Spiel in der Pumpenbohrung 14 zu fixieren. Eine große axiale Beweglichkeit des Dichtrings 24 wird ebenso wie eine axiale Stauchung des Dichtrings 24 durch Herstellungs- und Montagetoleranzen der den Kolben 20, die Laufbuchse 12, das aufgesetzte Filter 76 und den Verschlusselement 58 umfassenden Vormontagebaugruppe vermieden.

Die klemmende und durch Überwindung der Klemmkraft axial verschiebliche Anbringung des Filters 76 an der Laufbuchse 12 wird über eine konische Klemmfläche 98 an der Innenseite des Kragens 86 des Filters 76 erreicht, die an einer konischen Gegenfläche an der Außenseite der Laufbuchse 12 reibschlüssig anliegt. Die konische Gegenfläche verjüngt die Außenseite der Laufbuchse 12 in Richtung eines offenen, dem Exzenter 54 zugewandten Endes der Laufbuchse 12. Die Klemmfläche 98 ist auf einer der Laufbuchse 12 zugewandten Seite des Wulstes 88 vorgesehen.

## Patentansprüche

1. Kolbenpumpe mit einem zu einer hin- und hergehenden Hubbewegung antreibbaren Kolben, der auf einem Teil seiner Länge axial verschieblich in einer Laufbuchse aufgenommen ist, die in ein Pumpengehäuse einsetzbar ist, und mit einem rohrförmigen Filter, das in Verlängerung der Laufbuchse an der Laufbuchse angebracht ist und das den Kolben auf einem aus der Laufbuchse vorstehenden Abschnitt umschließt, wobei das Filter eine Verliersicherung für den Kolben aufweist, die eine Hinterschneidung des Kolbens hintergreift und den Kolben in der Laufbuchse hält, **dadurch gekennzeichnet, dass** das Filter (76) axial verschiebbar an der Laufbuchse (12) angebracht ist.

2. Kolbenpumpe nach Anspruch 1, **dadurch gekennzeichnet, dass** zur Anbringung des Filters (76) an der Laufbuchse (12) das Filter (76) eine Hinterschneidung (92) der Laufbuchse (12) nach Art einer Schnapp- oder Rastverbindung hintergreift.

3. Kolbenpumpe nach Anspruch 1, **dadurch gekennzeichnet, dass** das Filter (76) klemmend an der Laufbuchse (12) angebracht ist.

4. Kolbenpumpe nach Anspruch 3, **dadurch gekennzeichnet, dass** die Klemmung über eine konische Fläche (98) der Laufbuchse (12) erreicht wird.

5. Kolbenpumpe nach Anspruch 3, **dadurch gekennzeichnet, dass** die Klemmung über eine konische Fläche (98) des Filters (76) erreicht wird.

6. Kolbenpumpe nach Anspruch 1, **dadurch gekennzeichnet, dass** das Filter (76) eine Anlagefläche (96) zur axialen Abstützung im Pumpengehäuse (16) aufweist.

## Claims

1. Piston pump, with a piston which is capable of being driven in a to-and-fro stroke movement and which, on part of its length, is received axially displaceably in a liner capable of being inserted into a pump casing, and with a tubular filter which is attached to the liner in the prolongation of the latter and which surrounds the piston on a portion projecting from the liner, the filter having, for the piston, an anti-loss device which engages behind an undercut of the piston and which holds the piston in the liner, **characterized in that** the filter (76) is attached axially displaceably to the liner (12).

2. Piston pump according to Claim 1, **characterized in that**, for attaching the filter (76) to the liner (12), the filter (76) engages behind an undercut (92) of the liner (12) in the manner of a snapping or latching connection.

3. Piston pump according to Claim 1, **characterized in .that** the filter (76) is attached to the liner (12) in a clamping manner.

4. Piston pump according to Claim 3, **characterized in that** clamping is achieved via a conical surface (98) of the liner (12).

5. Piston pump according to Claim 3, **characterized in that** the clamping is achieved via a conical surface (98) of the filter (76).

6. Piston pump according to Claim 1, **characterized in that** the filter (76) has a bearing surface (96) for axial support in the pump casing (16).

## Revendications

1. Pompe à piston comportant un piston entraîné en translation suivant un mouvement de va-et-vient, et reçu sur une partie de sa longueur, de manière à coulisser axialement dans une chemise, celle-ci se plaçant dans le corps de la pompe, ainsi qu'un filtre tubulaire monté sur le prolongement de la chemise, sur celle-ci, et qui entoure le piston sur son segment dépassant de la chemise, le filtre constituant un moyen de protection contre la perte du piston, venant prendre dans une partie en contre-dépouille du piston et maintenant le piston dans la chemise,
**caractérisée en ce que**
le filtre (76) est monté de manière à coulisser axialement sur la chemise (12).

2. Pompe à piston selon la revendication 1,
**caractérisée en ce que**
le filtre (76) s'accroche derrière une partie en contre-dépouille (92) de la chemise (12) pour une liaison par enclipsage ou accrochage, pour installer le filtre (76) sur la chemise (12).

3. Pompe à piston selon la revendication 1,
**caractérisée en ce que**
le filtre (76) est installé de manière serrée sur la chemise (12).

4. Pompe à piston selon la revendication 3,
**caractérisée en ce que**
le serrage est réalisé par une surface conique (98) de la chemise (12).

5. Pompe à piston selon la revendication 3,
**caractérisée en ce que**
le serrage se fait par une surface conique (98) du filtre (76).

6. Pompe à piston selon la revendication 1,
**caractérisée en ce que**
le filtre (76) comporte une surface d'appui (96) pour son appui axial dans le corps (16) de la pompe.
